# EUROPÄISCHE PATENTSCHRIFT

(11) **EP 2 693 211 B1**
(45) Veröffentlichungstag und Bekanntmachung des Hinweises auf die Patenterteilung: **08.07.2015**
(21) Anmeldenummer: 13003680.9
(22) Anmeldetag: 23.07.2013
(51) Int. Cl.: G01N 30/68, G01N 27/62

(54) **Verfahren zur Herstellung eines Flammenionisationsdetektors und entsprechender Flammenionisationsdetektor**
Method for producing a flame ionisation detector and corresponding flame ionisation detector
Procédé de fabrication d'un détecteur d'ionisation de flamme et détecteur d'ionisation de flamme correspondant

(30) Priorität: 03.08.2012 DE 102012015204
(43) Veröffentlichungstag der Anmeldung: 05.02.2014
(73) Patentinhaber: Krohne Messtechnik GmbH, 47058 Duisburg (DE)
(72) Erfinder: Winfred, Kuipers, 45130 Essen (DE)
(74) Vertreter: Gesthuysen Patent- und Rechtsanwälte

(56) Entgegenhaltungen:
- EP-A1- 2 037 264
- DE-A1- 10 247 857
- US-A1- 2004 043 479

## Beschreibung

Die Erfindung betrifft ein Verfahren zur Herstellung eines Flammenionisationsdetektors, wobei der Flammenionisationsdetektor mindestens eine Brennkammer, mindestens einen Kanal zur Führung eines Gases oder Gasgemisches und mindestens eine Elektrodenstruktur aufweist. Dabei werden in grünen Keramikfolien Strukturen in Form von Vertiefungen so eingebracht und/oder grüne Keramikfolien mit Strukturen in Form von Vertiefungen so erzeugt, so dass die Strukturen in unterschiedlichen Keramikfolien sich zu mindestens einem Hohlraum ergänzen, Bei dem Hohlraum handelt es sich um eine Brennkammer oder einen Kanal. Weiterhin wird auf mindestens einer grünen Keramikfolien mindestens ein Teil einer elektrisch leitfähigen Struktur aufgebracht, wobei die elektrisch leitfähige Struktur einen Teil der Elektrodenstruktur oder einer Leiterstruktur für eine elektrische Kontaktierung bildet. Schließlich werden die grünen Keramikfolien gestapelt, miteinander laminiert und so einem Sinterungsprozess unterzogen, dass sich ein keramischer Monolith ergibt. Die Erfindung betrifft ferner einen entsprechenden Flammenionisationsdetektor.

Flammenionisationsdetektoren (FID) dienen der Messung von organischen Verbindungen, insbesondere von flüchtigen kohlenwasserstoffhaltigen Substanzen. Das Prinzip besteht darin, dass die elektrische Leitfähigkeit einer Knallgasflamme zwischen zwei Elektroden gemessen wird. Das zu analysierende Medium wird dabei mit einem Brenngas (üblicherweise Wasserstoffgas oder eine Mischung aus Wasserstoff und Helium) und einem Oxidationsmittel (zumeist Sauerstoff oder Luft) in einen Brennraum geführt und dort ionisiert. Die Ionen werden detektiert, indem an zwei Elektroden (Mess- und Gegenelektrode), die im Bereich der Brennkammer angeordnet sind, eine Spannung angelegt und der sich ergebende Ionenstrom gemessen und ausgewertet wird.

Ein Vorteil von Flammenionisationsdetektoren besteht darin, dass das Messsignal über einen weiten Konzentrationsbereich linear proportional zur Menge des Analyten bzw. genauer: zu dessen wasserstoffgebundenem Kohlenstoffgehalt ist. Daher kann beispielsweise die Konzentration eines Kohlenwasserstoffs ohne vorherige Kalibrierung ermittelt werden.

Ein Flammenionisationsdetektor verfügt üblicherweise über eine Brennkammer, über Elektroden, über Kanäle zum Zu- und Abführen der Gase bzw. Gasgemische und eine Zündvorrichtung. Die Öffnungen der Kanäle in die Brennkammer werden als Düsen bezeichnet. Damit durch das System fließende Leckströme nicht mitdetektiert werden und dadurch die Messung verfälschen, ist zumeist auch eine Schutzelektrode vorgesehen.

Werden das Brenngas und das Oxidationsmittel aus einander entgegengesetzten Richtungen in die Brennkammer geführt, so bezeichnet man die Anordnung auch als Gegenstrombrenner. Gegenstromflammen brennen in der unmittelbaren Nähe eines Staupunkts, der wegen des minimalen Wärmeverlustes die hohe Ionisationseffizienz solcher Flammen begründet.

Beschrieben werden unterschiedliche Ausgestaltungen von Flammenionisationsdetektoren beispielweise in den Druckschriften DE 197 55 555 A1, DE 44 25 304 A1 oder GB 1 451 795 A.

Da bei der Messung Wasserstoff Anwendung findet, werden Flammenionisationsdetektoren vorzugsweise klein ausgeführt, um die Explosionsgefahr herabzusetzen. Eine Bezeichnung für solche miniaturisierten Flammenionisationsdetektoren ist µFID.

Bekannt sind Flammenionisationsdetektoren, die mit Verfahren der Mikrosystemtechnik hergestellt sind. Die Offenlegungsschrift WO 2009/036854 A1 bzw. die zugehörigen europäische Patentschrift EP 2 191 263 B1 oder die Offenlegungsschrift EP 2 037 264 A1 beschreiben einen planar aufgebauten Flammenionisationsdetektor, der aus wenigstens drei miteinander verbundenen plättchenförmigen Substraten aus Glas bzw. Silizium besteht.

Die Offenlegungsschriften DE 10 2009 035 762 A1 und EP 2 447 716 A1 beschreiben einen ebenfalls aus drei Schichten (Glas bzw. Silizium) bestehenden und mittels Verfahren der Mikrosystemtechnik gefertigten Flammenionisationsdetektor, der als Gegenstrombrenner ausgestaltet ist. Auf dem Boden eines Substrats sind in Dünnfilmtechnik die Mess- und Schutzelektrode aufgebracht, wobei die seitlichen Wände der Brennkammer die Gegenelektrode bilden. Zudem ist noch ein temperaturabhängiger Widerstand als Temperatursensor vorgesehen. Diskutiert werden unterschiedliche Anordnungen der Kanäle für die Führung der Gase. Aufgrund der Tatsache, dass Substrate aus unterschiedlichen Materialien mit zum Teil unterschiedlichen Temperarturkoeffizienten verwendet werden, kann der Detektor je nach Anwendung unter thermischem Stress leiden bzw. sind die Strukturen des Detektors in Abhängigkeit vom unterschiedlichen Ausdehnungsverhalten in Folge von Temperaturänderungen auszugestalten.

In dem Aufsatz "Development and analysis of a LTCC micro stagnation-point flow combustor" von Ming-Hsun Wu und Richard A. Yetter, J. Micromech. Microenc. 18 (2008), Nummer 12 wird ein Gegenstrombrenner beschrieben, der mittels LTCC-Verfahren erzeugt worden ist.

Niedertemperatur-Einbrand-Keramiken (Low Temperature Cofired Ceramics, LTCC) werden eingesetzt, um mehrlagige keramische Strukturen zu erzeugen. Dabei werden ungebrannte - sogenannte grüne - Keramikfolien einzeln strukturiert, gestapelt, laminiert und einem Sinterprofil bei einer Spitzentemperatur von ca. 850 °C - 900 °C unterzogen; für ungebrannte Keramikfolien wird im folgenden stets der fachübliche Begriff "grüne Keramikfolien" verwendet. In den beim Sintern auftretenden maximalen Temperaturen unterscheidet sich das LTCC-Verfahren vom Erzeugen von Hochtemperatur-Einbrand-Keramiken (High Temperature Cofired Ceramics, HTCC), die bei Temperaturen zwischen 1600 °C und 1800 °C gesintert werden. Bekannt sind weiterhin Dickschicht-Hybridtechniken, wobei auf bereits gesinterte Keramikstubstrate Leiterbahnen oder Widerstände im Siebdruckverfahren aufgebracht werden. Der bedruckte Träger wird gebrannt, wobei die aufgebrachten Pasten zu Schichten verschmelzen. Anschließend findet ggf. eine Bestückung mit diskreten Bauteilen statt.

Ein Gassensor in keramischer Mehrlagentechnologie lässt sich der DE 102 47 857 A1 entnehmen. Beschrieben wird dort in Bezug auf die keramische Mehrlagentechnologie, dass grüne keramische Lagen gestanzt und gelocht werden und dass mittels Dickschichttechnik Leiterbahnen aufgebracht werden. Die Lagen werden anschließend laminiert und gesintert. Schließlich lassen sich SMD-Bauteile oder aktive Bauteil auflöten oder durch Bond-Prozesse aufbringen.

Die Herstellung von Vorrichtungen und Bauteilen von Mikro-Gasanalysatoren offenbart die US 2004/0043479 A1. Dabei werden in grünen Keramikfolien Strukturen erzeugt und Leiterbahnen aufgebracht. Bei einem Ausführungsbeispiel werden auch Flammenionisationsdetektoren als mögliche Anwendung genannt.

Die Aufgabe der Erfindung besteht darin, ein Verfahren zur Herstellung eines µFID anzugeben, das die Nachteile des Standes der Technik vermeidet und zu einem µFID führt, der insbesondere eine hohe Beständigkeit gegenüber den Bedingungen in der Brennkammer, wie beispielswiese reaktivem Sauerstoff bei hoher Temperatur aufweist.

Das erfindungsgemäße Verfahren, bei dem die zuvor hergeleitete und aufgezeigte Aufgabe gelöst ist, ist zunächst und im Wesentlichen durch folgende Schritte gekennzeichnet: In grünen - also ungesinterten - Keramikfolien - also relativ dünnen Schichten - werden Strukturen (also insbesondere geometrische oder räumliche Strukturen) - insbesondere mit durchgehenden Aussparungen und/oder Vertiefungen - eingebracht. Alternativ oder ergänzend werden grüne Keramikfolien mit bereits bestehenden Strukturen - insbesondere ebenfalls vorzugsweise in Gestalt von durchgehenden Aussparungen und/oder Vertiefungen - erzeugt, d. h. die grünen Keramikfolien weisen nach ihrer Herstellung bereits die Strukturen auf. In einem weiteren Schritt wird auf mindestens einer grünen Keramikfolie mindestens ein Teil einer elektrisch leitfähigen Struktur (beispielsweise zumindest teilweise mittels Siebdruckverfahrens) aufgebracht. Durch das Siebdruckverfahren lassen sich beispielsweise auch eine Zündvorrichtung, ein Temperatursensor, eine Messelektrode oder auch eine Isolation aufbringen. In einer Ausgestaltung wird die elektrisch leitfähige Struktur zumindest teilweise durch eine metallische Struktur gebildet. Teile der elektrisch leitfähigen Struktur sind beispielsweise eine Leiterstruktur für die elektrische Kontaktierung und/oder mindestens ein Teil der Elektrodenstruktur (zumindest Mess- und Gegenelektrode, vorzugsweise ergänzt um mindestens eine Schutzelektrode). Die für den Flammenionisationsdetektor erforderlichen grünen Keramikfolien werden im nächsten Schnitt aufeinander gestapelt. Die grünen Keramikfolien sind dabei ggf. vorher bereits zu Blöcken vorgruppiert worden bzw. es sind vorher mehrere Keramikfolien zu dickeren Keramikfolienstapeln gepackt worden. Anschließend werden die gestapelten grünen Keramikfolien miteinander laminiert. Unter Laminieren sei dabei ganz allgemein jegliche Art eines Verbindens mittels eines Klebers verstanden. Darauf folgend werden die grünen Keramikfolien - jeweils einzeln, insgesamt als ein Stapel oder teilweise in einzelnen Gruppen - einem Sinterungsprozess unterzogen. Der gesinterte Stapel kann ggf. noch nachbearbeitet werden. So werden beispielsweise noch Kontakte oder Zu- bzw. Ableitungen oder Aussparungen, Bohrungen etc. an- oder aufgebracht bzw. erzeugt. Nach der Sinterung ergibt sich ein im Wesentlichen keramischer Monolith, der sich insbesondere dadurch auszeichnet, dass er bis auf die bewusst eingebrachten Durchführungen und Kanäle im Wesentlichen hermetisch dicht ist und dessen Bestandteile kein unterschiedliches thermischen Ausdehnungsverhalten zeigen, so dass sich in Folge einer Temperaturänderung kein thermischer Stress ergibt. Weiterhin ergibt sich durch das Sintern eine hohe Temperaturstabilität. Die gesinterten Keramikschichten sind auch gegenüber gewissen Chemikalien deutlich beständiger als beispielsweise Schichten aus Silizium bzw. Glas. Die Anzahl der verwendeten und ggf. gruppierten Keramikfolgen kann dabei sehr hoch, insbesondere größer als 10, beispielsweise bis zu 28 Stück betragen.

Erfindungsgemäß ist vorgesehen, dass elektrische und/oder fluidische und/oder thermische Zu- und/oder Ableitungen des

Flammenionisationsdetektors derartig im Flammenionisationsdetektor angeordnet und/oder in Richtung auf eine Seite des Flammenionisationsdetektors geführt werden, dass der Flammenionisationsdetektor eine Verwendung als SMD-Bauteil erlaubt. Die Zu- und/oder Ableitungen dienen dem Anschluss des Flammenionisationsdetektor an die Umgebung, damit die erforderlichen bzw. auftretenden Substanzen oder Energieformen usw. herangeführt bzw. abgeführt werden. Werden nun diese Übergänge so angeordnet bzw. geführt, so dass zumindest eine Mehrheit auf einer Seite des Flammenionisationsdetektors enden, so lässt sich der Flammenionisationsdetektor dann auch als SMD-Bauteil entsprechend einfach verwenden und auf andere Strukturen aufbringen.

In einer Ausgestaltung werden die grünen Keramikfolien einem Sinterungsprozess mit einer maximalen Temperatur unterhalb von 1000 °C (insbesondere zwischen 800 °C und 900 °C) unterzogen. Gemäß dieser Ausgestaltung wird im Wesentlichen ein LTCC-Verfahren zur Herstellung des µFID verwendet.

In einer alternativen Ausgestaltung werden die grünen Keramikfolien einem Sinterungsprozess mit einer maximalen Temperatur oberhalb von 1000 °C (insbesondere zwischen 1600 °C und 1800 °C) unterzogen. Gemäß dieser Ausgestaltung wird im Wesentlichen ein HTCC-Verfahren zur Herstellung des µFID verwendet, das eine noch höhere chemische und thermische Beständigkeit gewährleistet.

In einer Ausgestaltung werden in den grünen Keramikfolien (geometrische) Strukturen derartig eingebracht bzw. werden die grüne Keramikfolien mit Strukturen derartig erzeugt, dass sich Strukturen in unterschiedlichen Keramikfolien zu mindestens einem Hohlraum ergänzen. Dies ergänzend zu Strukturen, die in nur einer Folie bzw. einem einheitlichen Block von Folien verlaufen und dort bereits einen Hohlraum bilden. Bei dem Hohlraum kann es sich dabei z. B. um die Brennkammer oder um einen Kanal usw. handeln. Diese Ausgestaltung nimmt darauf Rücksicht, dass die Dimensionierung der erforderlichen Gesamtstrukturen des FID größer sein kann als die Dicken der einzelnen Keramikfolien. Daher werden die Keramikfolien derartig strukturiert, dass sie sich gegenseitig zu den Hohlräumen des FID ergänzen. Die Strukturierung wird dabei an einzelnen Keramikfolien durchgeführt oder an zu Blöcken gebündelten Keramikfolien.

In einer Ausgestaltung wird auf mehreren Keramikfolien jeweils mindestens ein Teil der elektrisch leitfähigen Struktur (z. B. einer Leiterstruktur und/oder mindestens ein Teil der Elektrodenstruktur) derartig aufgebracht, dass sich die aufgebrachten Teile der elektrisch leitfähigen Struktur gegenseitig zu funktionsfähigen Einheiten ergänzen (beispielsweise zu den vollständigen Abschnitten der Leiterstruktur bzw. der Elektrodenstruktur usw.). Auch bei den elektrischen Strukturen ergänzen sich die Bestandteile auf den Keramikfolien zu den erforderlichen Gesamtstrukturen. Einzelne Strukturen erstrecken sich ggf. auch nur über eine Keramikfolie.

Um den Effekt von durch das System fließenden Leckströmen zu vermeiden, ist in einer Ausgestaltung mindestens eine Schutzelektrode vorgesehen. Auf eine solche Schutzelektrode beziehen sich die folgenden Ausgestaltungen.

In einer Ausgestaltung ist vorgesehen, dass auf mindestens einer grünen Keramikfolie mindestens eine im Wesentlichen gitterförmige Schutzelektrode aufgebracht wird. Die Keramikfolie mit der gitterförmigen Schutzelektrode befindet sich insbesondere nach dem Vorgang des Laminierens zwischen der Mess- und der Gegenelektrode. Weiterhin befinden sich ggf. noch weitere Keramikfolien zwischen der Keramikfolie mit der gitterförmigen Schutzelektrode und der Mess- bzw. zwischen der mit der gitterförmigen Schutzelektrode versehenen Keramikfolie und der Gegenelektrode zum Zweck der Isolation.

In einer weiteren Ausgestaltung wird auf einer grünen Keramikfolie mindestens ein Teil der Elektrodenstruktur derartig erzeugt, dass auf der grünen Keramikfolie mindestens teilweise eine Schutzelektrode aufgebracht wird. Auf der Schutzelektrode wird zumindest teilweise eine Isolation (z. B. als dielektrische Paste) aufgebracht, auf die mindestens teilweise eine Messelektrode aufgebracht wird. In einer weiteren Ausgestaltung folgen der Messelektrode eine weitere Isolation und darauf eine weitere Schutzelektrode. Dabei ist darauf zu achten, dass die Lagen bzw. Folien nicht vollständig die Messelektrode abdecken, sondern sie je nach Bedarf ggf. frei lassen. So liegt insbesondere innerhalb der zu erzeugenden Brennkammer die Messelektrode frei.

In einer Ausgestaltung wird mindestens zwischen zwei Schritten des Aufbringens - also der Elektrodenstruktur oder der Schutzelektrode oder der Messelektrode oder der Isolation usw. - mindestens ein Sinterungsprozess vorgenommen. In einer weiteren Ausgestaltung wird nach jedem - zuvor beispielhaft genannten - Schritt eines Aufbringens eines Teils des Flammenionisationsdetektors eine Sinterung vorgenommen. Dem schließt sich dann in einer Ausgestaltung an, dass die Keramikfolien - gleich einem Struktur gebenden Gerüst - mittels LTCC oder HTCC um die funktionelle Anordnung herum erzeugt wird.

Die Erfindung bezieht sich weiterhin auf einen Flammenionisationsdetektor, der gemäß einer der zuvor genannten Ausgestaltungen des erfinderischen Verfahrens hergestellt worden ist.

Bei dem erfindungsgemäßen Flammenionisationsdetektor ist vorgesehen, dass elektrische und/oder fluidische und/oder thermische Zu- und/oder Ableitungen auf einer Seite des Flammenionisationsdetektors zumindest teilweise konzentriert sind, so dass der Flammenionisationsdetektor eine Verwendung als SMD-Bauteil erlaubt. Elektrische Zu- und/oder Ableitungen sind dabei elektrische Anschlüsse, die z. B. dem Abgriff eines Sensorsignals oder zum Betreiben der Elektrodenstruktur oder eines Temperatursensors dienen. Die fluidischen Zu- und/oder Ableitungen dienen dabei beispielsweise der Zuführung des Messmediums, der erforderlichen Gase oder der Abführung der Abgase. Fluid wird daher in diesem Zusammenhang auf gasförmige oder flüssige oder sonstige fließfähige Medien bezogen. Thermische Zu- und/oder Ableitungen erlauben die Abführung der Wärme aus der Brennkammer oder einer Vorerwärmung des Messmediums oder der Gase usw. Erfingdungsgemäß ist zumindest ein Teil der Zu- und/oder Ableitungen so auf einer Seite, z. B. auf einer Unterseite des Flammenionisationsdetektors konzentriert, d. h. zu dieser Seite für den Anschluss an Versorgungs- oder Abführungsleitungen oder -bauteile usw. hingeführt, dass der Flammemonisationsdetektor eine Anwendung als SMD-Bauteile erlaubt. Solche surface-mounted devices erlauben die direkte Aufbringen beispielsweise auf einer Leiterplatte. Um dies zu ermöglichen, münden möglichst viele der Zu- und/oder Ableitungen auf einer Seite des Flammenionisationsdetektors, was sich insbesondere über deren Führung im Flammenionisationsdetektor realisieren lässt. Die Konzentrierung bezieht sich somit vor allem auf den Bereich, indem die Leitungen enden, bzw. auf das Erzeugen des Übergangs zum Außenbereich des Flammenionisationsdetektors.

Im Einzelnen gibt es nun eine Vielzahl von Möglichkeiten, das erfindungsgemäße Verfahren und den erfindungsgemäßen Flammenionisationsdetektor auszugestalten und weiterzubilden. Dazu wird verwiesen einerseits auf die dem Patentanspruch 1 und dem Patentanspruch 5 nachgeordneten Patentansprüche, andererseits auf die folgende Beschreibung von Ausführungsbeispielen in Verbindung mit der Zeichnung. In der Zeichnung zeigen
- Fig.1: eine schematische Explosionsdarstellung eines erfindungsgemäßen Flammenionisationsdetektors,
- Fig.2: eine schematische Darstellung eines Teils einer Elektrodenstruktur eines erfindungsgemäßen Flammenionisationsdetektors einer alternativen Ausgestaltung im Schnitt ,
- Fig.3: eine schematische Darstellung eines zeitlichen Verlaufs von Schritten des erfindungsgemäßen Herstellungsverfahrens eines Flammenionisationsdetektors und
- Fig.4: eine schematische Darstellung eines Teils eines Flammenionisationsdetektors im Schnitt.

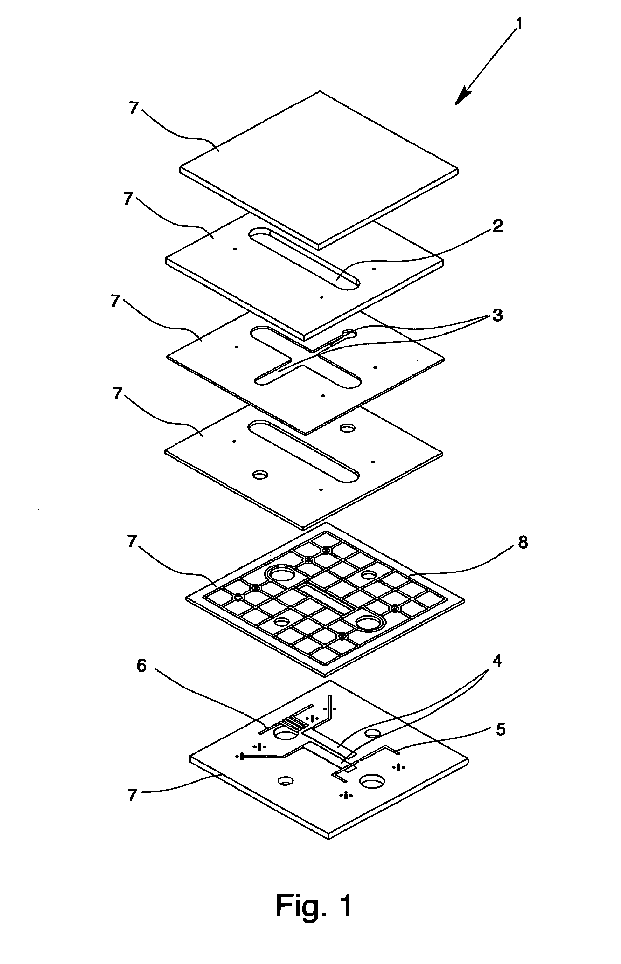

Die Fig. 1 zeigt in Explosionsdarstellung einen über sechs Ebenen bzw. sechs Blöcke verfügenden Flammenionisationsdetektor 1, der insbesondere als µFID ausgestaltet ist. Zentral befindet sich die Brennkammer 2, in der die zu untersuchende Probe in einer Wasserstoffflamme ionisiert wird. Der Zuführung des Brenngases bzw. des Oxidationsmittels und anschließend auch der Abführung des verbrannten Gases dienen Kanäle 3, die über sogenannte Düsen in die Brennkammer 2 münden.

Durch die Elektrodenstruktur 4 als Teil der elektrisch leitfähigen bzw. insbesondere metallischen Struktur mit einer Mess- und einer Gegenelektrode und insbesondere vorzugsweise auch einer Schutzelektrode 8 wird der Ionenstrom gemessen, indem an die Mess- und die Gegenelektrode eine elektrische Spannung angelegt wird. Der gemessene Strom erlaubt eine Aussage über die Konzentration einer bestimmten Substanz im zu untersuchenden Medium.

Für die Erzeugung der Flamme ist noch eine Zündvorrichtung 5 vorgesehen. Zusätzlich dient der Messung ein Temperatursensor 6, der hier in Form eines mäanderförmig angeordneten temperaturabhängigen Widerstands ausgeführt ist.

Der Flammenionisationsdetektor 1 besteht aus mehreren Blöcken aus einzelnen oder mehreren Keramikfolien 7, die jeweils eine Struktur in Form von durchgehenden Aussparungen oder Vertiefungen aufweisen, die sich insgesamt zu den für das Funktionieren des Flammenionisationsdetektors 1 erforderlichen Hohlräumen ergänzen. Weiterhin sind auf den Keramikfolien 7 bzw. den jeweils daraus gebildeten Blöcken noch die notwendigen elektrischen Strukturen wie die Elektrodenstruktur 4, die beispielsweise zum Führen der Messsignale erforderlichen Leiterstrukturen oder auch eine im Wesentlichen gitterförmige Schutzelektrode 8 vorgesehen. Die elektrisch leitfähigen Strukturen verlaufen vorzugsweise innerhalb des Flammenionisationsdetektors 1 und für die Anschlüsse sind - hier zeichnerisch nach unten geführt - Durchkontaktierungen vorgesehen. Vorzugsweise sind auch alle anderen Zuleitungen oder Ableitungen für Gase, Flüssigkeiten, elektrische Anschlüsse, thermische Anschlüsse oder Abführungen alle zu einer Seite oder zu einer Fläche, hier insbesondere zur Unterseite des Flammenionisationsdetektors 1 geführt. Dies erlaubt es, den Flammenionisationsdetektor 1 beispielsweise als SMD-Bauteil zu verwenden und direkt auf andere Strukturen aufzubringen.

Einzelne beispielhafte elektrisch leitfähige bzw. metallische Strukturen, Anschlüsse, Durchführungen, Mess- und Gegenelektrode als Teile der Elektrodenstruktur 4, Zündvorrichtung 5, Temperatursensor 6 usw. sind hier für die Vereinfachung der Darstellung teilweise gebündelt oberhalb des hier untersten Blocks der Keramikfolien 7 dargestellt. Für die praktische Umsetzung befindet sich beispielsweise die Schutzelektrode 8 jedoch in einer Ebene zwischen Mess- und Gegenelektrode.

In einer Ausgestaltung befinden die Gegenelektrode, der Temperatursensor 6 und/oder die Zündvorrichtung 5 unterhalb des hier obersten Blocks, der planar und ohne geometrische Strukturen ausgeführt ist. Dieser hier zeichnerisch oberste Block fungiert dabei als Deckel. Auf diesen Deckel lassen sich ggf. auch weitere - hier nicht dargestellte - Bauteile aufbringen, so z. B. eine Kühleinheit.

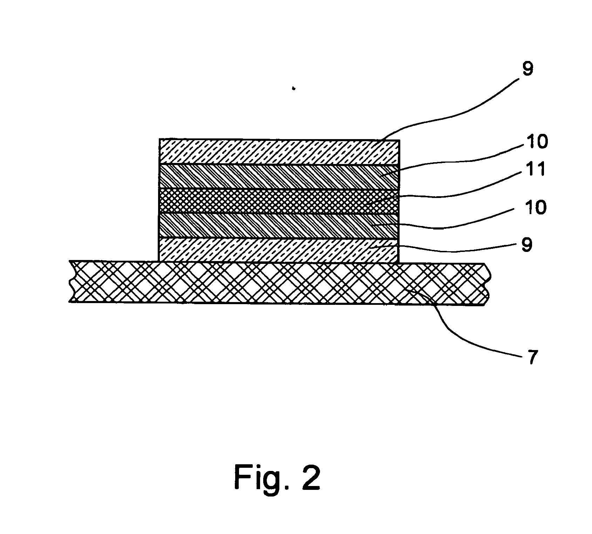

Die Fig. 2 zeigt einen Schnitt durch eine rein schematische Anordnung einer zur Fig. 1 alternativen Ausgestaltung der Elektrodenstruktur 4. Dargestellt ist vor allem der Bereich der Schutzelektrode 9, der hier alternativ zur gitterförmigen Schutzelektrode 8 der Fig. 1 ausgeführt ist. Auf einer Keramikfolie 7 befindet sich eine Schutzelektrode 9, die durch eine Isolation 10 (eine dielektrische Paste) elektrisch von der Messelektrode 11 getrennt ist. Oberhalb der Messelektrode 11 befindet sich eine weitere Isolation 10 und daran anschließend eine weitere Schutzelektrode 9. Die Messelektrode 11 liegt innerhalb der Brennkammer frei und ist außerhalb der Brennkammer im Wesentlichen vollständig von der Schutzelektrode 9 umgeben. Für die Isolierung wird vorzugsweise bei einer Umsetzung auch an den Seiten beispielsweise noch eine dielektrische Paste aufgebracht.

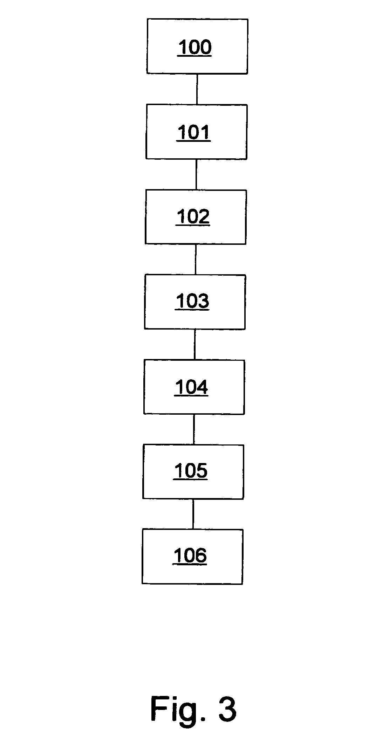

Die Fig. 3 gibt einen möglichen Ablauf der einzelnen Schritte des erfindungsgemäßen Verfahrens an.

Im Schritt 100 werden einzelne grüne Keramikfolien 7 zu Gruppen bzw. Stapeln angeordnet. Im Schritt 101 werden in den Gruppen Strukturen, z. B. durch Stanzen, Fräsen oder Ätzen erzeugt. Es werden somit die Geometrien eingefügt, die insgesamt im fertigen Flammenionisationsdetektor Hohlräume für die Gase bzw. für Durchführungen usw. bilden.

Im Schritt 102 werden die elektrischen bzw. insbesondere metallischen Strukturen, Elemente usw. auf den Keramikfolien aufgebracht. Dies beispielsweise zumindest teilweise durch ein Siebdruckverfahren.

Im Schritt 103 werden die beteiligten Keramikfolien gestapelt und im Schritt 104 laminiert, um im Schritt 105 einem Sinterprozess unterzogen zu werden.

Im Schritt 106 findet noch eine Nachbearbeitung des keramischen Monoliths statt. Dabei handelt es sich beispielsweise um das Aufbringen weiterer Beschichtungen, um das Einbringen in weitere Strukturen, um das erzeugen von größeren Anschlusseinheiten usw.

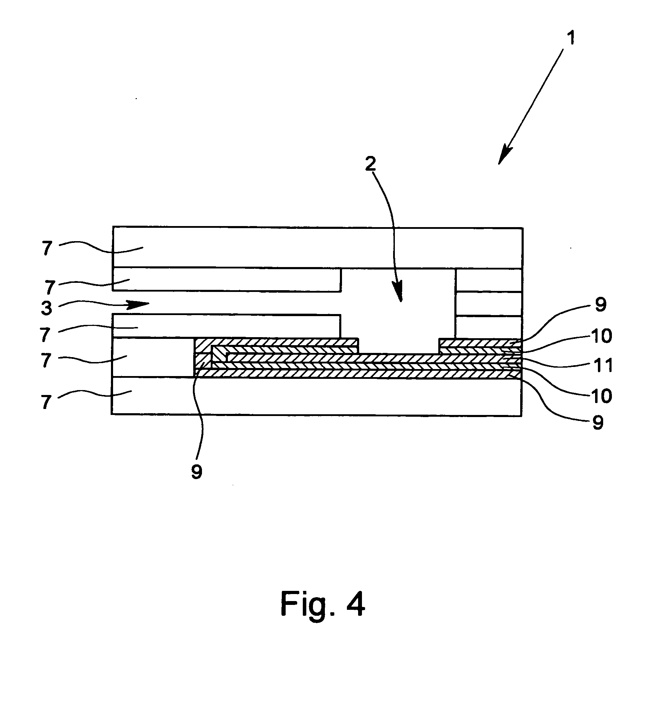

In der weiteren beispielhaften Ausgestaltung der Fig. 4 sind auf den Zufuhrleitungen der Messelektrode 11 eine Isolationsschicht 10 und darauf eine weitere Schutzelektrode 9 so aufgebracht, so dass die Messelektrode 11 in der Brennkammer 2 freiliegt. Außerhalb der Brennkammer 2 ist die Messelektrode 11 in zwei Isolationsschichten 10 vollständig eingebettet, die wiederum durch eine aus drei Schichten (unter- und oberhalb und einmal seitlich) bestehende Schutzelektrode 9 geschützt sind.

Die jeweiligen Leiterbahnen sind dabei insgesamt in dem keramischen Monolith eingebettet, der sich insgesamt für den Flammenionisationsdetektor schließlich ergibt. Dabei sind vorzugsweise alle heraus- bzw. hineinführenden Anschlüsse bzw. allgemein Verbindungen nach außen so auf einer Seite zusammengeführt, dass sich der Flammenionisationsdetektor als SMD-Bauteil verwenden lässt.

Die unterschiedlichen Schichten können dabei nach dem Dickschichtverfahren auf einer bereits gesinterten Keramik - hier der untersten Lage - einzeln mittels Siebdruck aufgebracht und anschließend jeweils gesintert werden. Die Brennkammer 2 und Kanäle 3 werden beispielsweise auf dem fertigen Dickschichtsubstrat - d. h. hier bestehend aus der Messelektrode 11, den Schutzelektroden 9 und den Isolationsschichten 10 - mittels LTCC- oder HTCC-Technologie aufgebaut.

Die Fertigung des Flammenionisationsdetektors 1 der Fig. 4 kann dabei in einer Ausgestaltung mit folgenden (Dickschicht-)Prozessschritten vorgenommen werden, an die sich beispielweise die (LTCC-)Prozessschritte des Beispiels der Fig. 3 anschließen:
Mittels Siebdruck wird die unterste Schutzelektrode 9 auf einem bereits gesinterten Keramiksubstrat 7 aufgebracht. Daran schließt sich eine Sinterung an. Die Isolationsschicht 10 wird mittels Siebdruck an den passenden Stellen aufgebracht. Daraufhin erfolgt wieder eine Sinterung, worauf mittels Siebdruck die Messelektrode 11 und beispielsweise auch die seitlich an die Messelektrode 11 angrenzende Schutzelektrode 9 erzeugt wird. Auf einen weiteren Sinterungsvorgang wird die weiteren Isolationsschicht 10 mittels Siebdruck erzeugt. Nach einem weiteren Sintern wird mittels Siebdruck die obere Schutzelektrode 9 aufgebracht.

Daran schließen sich die Schritte der Fig. 3 beispielweise an für die LTCC-Folien 7, die somit um die Struktur aus Mess- 11 und Schutzelektroden 9 sowie Isolationsschichten 10 herum erzeugt werden.

## Patentansprüche

1. Verfahren zur Herstellung eines Flammenionisationsdetektors (1), wobei der Flammenionisationsdetektor (1) mindestens eine Brennkammer (2), mindestens einen Kanal (3) zur Führung eines Gases oder Gasgemisches und mindestens eine Elektrodenstruktur (4) aufweist, wobei in grünen Keramikfolien (7) Strukturen in Form von Vertiefungen so eingebracht und/oder grüne Keramikfolien (7) mit Strukturen in Form von Vertiefungen so erzeugt werden, so dass Strukturen in unterschiedlichen Keramikfolien sich zu mindestens einem Hohlraum ergänzen, wobei es sich bei dem Hohlraum um eine Brennkammer oder einen Kanal handelt, wobei auf mindestens einer grünen Keramikfolie (7) mindestens ein Teil einer elektrisch leitfähigen Struktur (4, 8, 9) aufgebracht wird, wobei die elektrisch leitfähige Struktur (4, 8, 9) einen Teil der Elektrodenstruktur (4) und/oder einer Leiterstruktur für eine elektrische Kontaktierung bildet, wobei die grünen Keramikfolien (7) gestapelt, miteinander laminiert und so einem Sinterungsprozess unterzogen werden, dass sich ein keramischer Monolith ergibt,
**dadurch gekennzeichnet,**
**dass** elektrische und/oder fluidische und/oder thermische Zu- und/oder Ableitungen des Flammenionisationsdetektors (1) derartig im Flammenionisationsdetektor (1) angeordnet und/oder in Richtung auf eine Seite des Flammenionisationsdetektors (1) geführt werden, dass der Flammenionisationsdetektor (1) eine Verwendung als SMD-Bauteil erlaubt.

2. Verfahren nach Anspruch 1, **dadurch gekennzeichnet, dass** auf mindestens einer grünen Keramikfolie (7) mindestens eine im Wesentlichen gitterförmige Schutzelektrode (8) aufgebracht wird.

3. Verfahren nach Anspruch 1 oder 2, **dadurch gekennzeichnet, dass** auf mindestens einer grünen Keramikfolie (7) mindestens ein Teil der Elektrodenstruktur (4) als Teil der elektrisch leitfähigen Struktur derartig erzeugt wird, dass auf der grünen Keramikfolie (7) mindestens teilweise eine Schutzelektrode (9) aufgebracht wird, dass auf der Schutzelektrode (9) zumindest teilweise eine Isolation (10) aufgebracht wird und dass auf der Isolation (10) mindestens teilweise eine Messelektrode (11) aufgebracht wird.

4. Verfahren nach Anspruch 3, **dadurch gekennzeichnet, dass** mindestens zwischen zwei Schritten des Aufbringens mindestens ein Sinterungsprozess vorgenommen wird.

5. Flammenionisationsdetektor (1), hergestellt mit dem Verfahren nach einem der Ansprüche 1 bis 4.

6. Flammenionisationsdetektor (1) nach Anspruch 5, **dadurch gekennzeichnet, dass** es sich bei der elektrisch leitfähigen Struktur (4, 8) zumindest teilweise um eine metallische Struktur handelt.

## Claims

1. Method for producing a flame ionization detector (1), wherein the flame ionization detector (1) has at least one combustion chamber (2), at least one channel (3) for directing a gas or gas mixture and at last one electrode structure (4), wherein structures in the form of recesses are implemented in green ceramic films (7) and/or green ceramic films (7) are produced with structures in the form of recesses so that structures in different ceramic films combine to form at least one hollow space, wherein the hollow space is a combustion chamber or a channel, wherein at least one part of an electrically conductive structure (4, 8, 9) is applied on at least one green ceramic film (7), wherein the electrically conductive structure (4, 8, 9) forms a part of the electrode structure (4) and/or a conductor structure for an electric contact, wherein the green ceramic films (7) are stacked, laminated with one another and subjected to a sintering process to form a ceramic monolith
**characterized in**
**that** electric and/or fluidic and/or thermal supply and/or discharge conduits are arranged in the flame ionization detector (1) and/or guided on one side of the flame ionization detector (1) so that the flame ionization detector (1) allows use as a SMD component.

2. Method according to claim 1, **characterized in that** at least one protective electrode (8) essentially in the form of mesh is applied on at least one green ceramic film (7).

3. Method according to claim 1 or 2, **characterized in that** at least one part of the electrode structure (4) as part of the electrically conductive structure is generated on the at least one green ceramic film (7), that a protective electrode (9) is at least partially applied on the green ceramic film (7), that an insulation (10) is at least partially applied on the green ceramic film (7) and that a measuring electrode (11) is at least partially applied on the insulation (10).

4. Method according to claim 3, **characterized in that** at least one sintering process is carried out at least between two steps of the application.

5. Flame ionization detector (1) produced using the method according to any one of claims 1 to 4.

6. Flame ionization detector (1) according to claim 5, **characterized in that** the electrically conductive structure (4, 8) is at least partially a metallic structure.

## Revendications

1. Procédé pour la fabrication d'un détecteur à ionisation de flamme (1), le détecteur à ionisation de flamme (1) présentant au moins une chambre de combustion (2), au moins un canal (3) pour guider un gaz ou un mélange gazeux et au moins une structure d'électrode (4), des structures étant réalisées sous forme de creux dans des feuilles céramiques crues (7) et/ou des feuilles céramiques crues (7) présentant des structures sous forme de creux étant réalisées de manière telle que des structures dans différentes feuilles céramiques se complètent pour former au moins un espace creux, où il s'agit, pour l'espace creux, d'une chambre de combustion ou d'un canal, au moins une partie d'une structure électriquement conductrice (4, 8, 9) étant appliquée sur au moins une feuille céramique crue (7), la structure électriquement conductrice (4, 8, 9) formant une partie de la structure d'électrode (4) et/ou formant une structure de conducteur pour un contact électrique, les feuilles céramiques crues (7) étant empilées, laminées les unes avec les autres et soumises à un procédé de frittage de manière à obtenir un monolithe céramique, **caractérisé en ce que** des conduites d'alimentation et/ou d'évacuation électriques et/ou fluidiques et/ou thermiques du détecteur à ionisation de flamme (1) sont disposées dans le détecteur à ionisation de flamme (1) et/ou guidées dans une direction sur un côté du détecteur à ionisation de flamme (1) de manière telle que le détecteur à ionisation de flamme (1) permet une utilisation comme composant monté en surface (CMS).

2. Procédé selon la revendication 1, **caractérisé en ce que** qu'une électrode de protection (8) essentiellement en forme de grille est appliquée sur au moins une feuille céramique crue (7).

3. Procédé selon la revendication 1 ou 2, **caractérisé en ce qu'**au moins une partie de la structure d'électrode (4) est réalisée comme partie de la structure électriquement conductrice sur au moins une feuille céramique crue (7) de manière telle qu'une électrode de protection (9) est appliquée au moins partiellement sur la feuille céramique crue (7), qu'une isolation (10) est appliquée au moins partiellement sur l'électrode de protection (9) et qu'une électrode de mesure (11) est appliquée au moins partiellement sur l'isolation (10).

4. Procédé selon la revendication 3, **caractérisé en ce qu'**au moins un procédé de frittage est réalisé au moins entre deux étapes de l'application.

5. Détecteur à ionisation de flamme (1), fabriqué selon le procédé selon l'une quelconque des revendications 1 à 4.

6. Détecteur à ionisation de flamme (1) selon la revendication 5, **caractérisé en ce qu'**il s'agit, pour la structure électriquement conductrice (4, 8), au moins en partie d'une structure métallique.
